# EUROPEAN PATENT APPLICATION

(11) **EP 4 477 876 A1**
(43) Date of publication of application: **18.12.2024**
(21) Application number: 23178982.7
(22) Date of filing: 13.06.2023
(51) Int. Cl.: F03D 13/10, F03D 13/25

(54) **METHOD FOR INSTALLING A WIND TURBINE SYSTEM AND WIND TURBINE SYSTEM**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The present invention relates to a method for installing a wind turbine system (1). The method comprises providing a wind turbine (2), arranging a functional platform (13) at an erected transition unit (12) of the wind turbine (2) by aligning a first functional connector (14) of the functional platform (13) with a first transition connector (15) of the transition unit (12) and by aligning a second functional connector (16) of the functional platform (13) with a second transition connector (17) of the transition unit (12), and fixing the connectors in a final end position (F). The invention also relates to a wind turbine system (1) with a wind turbine (2) for converting wind energy into electrical energy and a functional platform (13) for providing a technical function based on the electrical energy provided by the wind turbine (2).

## Description

The present invention relates to a method for installing a wind turbine system with a wind turbine and a functional platform. The invention also relates to a wind turbine system with a wind turbine and a functional platform.

Wind energy is a regenerative and, however, volatile energy source. Wind turbines for converting wind energy into electrical energy need a wind speed above a certain minimum for providing enough power for rotating a rotor and operating a generator of the wind turbine. For wind speeds above a predefined threshold, operation of the wind turbine must be suspended in order to avoid damages to the wind turbine due to critical loads.

Moreover, in periods of relatively strong winds, it might be indicated that the power generated by the wind turbine has to be reduced in order to avoid peaks in the power frequency of the power grid that the wind turbine is feeding to. In other words, the wind turbine is deliberately forced to generate less electrical power than it potentially could produce at the present wind speed.

Beyond that, in no wind phases, it may be necessary that electric energy has to be obtained from the power grid to avoid longer standstill periods of the rotor and damages to rotor bearings. Since availability of electric energy in no wind phases is usually relatively low, the drain of additional electric energy from the power grid is disadvantageous.

Due to these setbacks, there is a growing demand for increasing the overall efficiency of the wind turbine by storing at least a part of the energy produced by the wind turbine in an energy storage system. For this purpose, different energy storage systems have been applied, such as electrical energy storage systems, mechanical energy storage systems or chemical energy storage systems.

Chemical energy storage systems are also denoted as "power to X" system, wherein "X" is a variable for a chemical product, such as H₂, NH₃ or the like, which is produced by means of electric energy and one or more other chemical products, such as H₂O, CO₂, N₂ or the like. The produced chemical product can be, e.g., stored in a tank or transferred through a pipeline and can be used for producing electrical energy at a later time, e.g., when the availability of regenerative electrical energy is lower than the demand.

According to present solutions, electric energy produced by offshore wind farms is transferred to a land-based chemical energy storage system for being converted into a chemical product. This has the disadvantage that a lot of space has to be provided at the land site for the chemical energy storage system and necessary cooling systems. Moreover, especially at peak production levels of regenerative electrical energy, the power lines from the offshore wind farm to the power grid are heavily used and need to be designed accordingly. Both setbacks cause additional costs.

Beyond that, for the installation of new wind turbine systems with functional platforms, e.g., for an electrochemical production system, e.g., for the production of hydrogen or ammonia, the functional platforms might be available after the components for the wind turbine are ready for installation. Sometimes, this delay can take up to several months. As a result, the installation for the wind turbine has to be rescheduled to a later time. This leads to delayed production of electricity by the wind turbine and to a more complex installation procedure, since the components for the wind turbine and the functional platform have to be provided at the same time and installed according to a predetermined installation sequence. This leads to less productivity of the wind turbine and additional installation costs.

It is therefore the object of the present invention to eliminate or at least partially eliminate the disadvantages described above in the case of the installation of a wind turbine system. In particular, it is the object of the present invention to create a method for installing a wind turbine system with a wind turbine and a functional platform and a wind turbine with a wind turbine and a functional platform, which avoid the setbacks of a predefined installation sequence and/or enables a quicker production start for the wind turbine in a simple and inexpensive manner.

The above object is achieved by the claims. Accordingly, the problem is solved by a method for installing a wind turbine system with the features of the independent claim 1 and by a wind turbine system with the features of the subordinate claim 14. Further features and details of the invention emerge from the subclaims, the description and the drawings. Features and details that are described in connection with the method for installing a wind turbine system according to the invention naturally also apply in connection with the wind turbine system according to the invention and vice versa, so that with regard to the disclosure of the individual aspects of the invention, reference is or can always be made to each other.

According to a first aspect of the invention, the object is achieved by a method for installing a wind turbine system. The method comprises:
- Providing a wind turbine of the wind turbine system, wherein the wind turbine comprises a wind turbine tower with a base section, a transition piece, a working platform and an upper tower section and a nacelle with a rotor, a generator and wind turbine blades, wherein the transition piece and the working platform constitute a transition unit,
- Arranging a functional platform at the erected transition unit by aligning a first functional connector of the functional platform with a first transition connector of the transition unit and by aligning a second functional connector of the functional platform with a second transition connector of the transition unit, and
- Fixing the first functional connector to the first transition connector and/or the second functional connector to the second transition connector, when the functional platform is arranged in a final end position with respect to the transition unit.

At first, the wind turbine of the wind turbine system is provided. In this regard, the term "providing" can be considered as fully or at least partly installing the wind turbine, wherein at least the tower up to the transition piece with the working platform is installed in an erected position. Preferably, the complete wind turbine is installed and ready for producing electric energy. It is preferred, that the wind turbine is configured as an offshore wind turbine. Moreover, the first transition connector and the second transition connector are provided, e.g., already installed at the transition unit or being assembled to the transition unit, e.g., by welding, screwing or the like. It is further preferred that a third transition connector is provided as well, e.g., already installed at the transition unit or being assembled to the transition unit, e.g., by welding, screwing or the like. According to the invention, it can be provided that the transition piece is an integral part of the base or a separate part, which is attached to the base.

At second, the functional platform is arranged at the erected transition unit. The functional platform is a platform for providing a technical function based on the electrical energy provided by the wind turbine. Preferably, an electrochemical production system is installed at the functional platform. The electrochemical production system can be configured for converting electricity generated by the wind turbine by using a first chemical product, such as water, carbon dioxide, nitrogen or the like, into a second chemical product, such as hydrogen, ammonia or the like. The electrochemical production unit can be configured for producing one or more intermediate chemical products before the second chemical product is obtained. Preferably, the electrochemical production unit comprises an electrical interface, such as electrical wires, an electrical plug or the like, for being electrically coupled to a power system of the wind turbine. Thus, the electricity for the conversion process of the electrochemical production unit can be obtained from the wind turbine, especially the generator of the wind turbine.

The arranging of the functional platform at the erected transition unit comprises the aligning of the first functional connector of the functional platform with the first transition connector of the transition unit. The arranging of the functional platform at the erected transition unit further comprises the aligning of the second functional connector of the functional platform with the second transition connector of the transition unit. It is preferred that during the aligning process, the functional platform is arranged in a horizontal position.

The first functional connector and the first transition connector are preferably configured for supporting the alignment process, e.g., by providing a mutual guidance, e.g. by means of a hinge, a link guide or the like. Preferably, the second functional connector and the second transition connector are configured for supporting the alignment process, e.g., by providing a mutual guidance, e.g. by means of a stopper, a link guide or the like.

Furthermore, the functional platform is brought into the final end position with respect to the transition unit. In the final end position, the first functional connector is fixed to the first transition connector. Alternatively or additionally, the second functional connector is fixed to the second transition connector. The fixation is preferably done by bolts, nuts or the like. Furthermore, the first functional connector and the first transition connector are designed for mutually reducing degrees of freedom of a relative movement of the functional platform to the transition unit in the final end position. Alternatively or additionally, the second functional connector and the second transition connector are designed for mutually reducing degrees of freedom of a relative movement of the functional platform to the transition unit in the final end position. Preferably, the reducing of degrees of freedom is such that, before the fixation, a relative movement of the functional platform to the transition unit is only possible in one direction, preferably in a vertical direction upwards.

A method for installing a wind turbine system according to the invention has the advantage over conventional methods that in a simple and inexpensive way, a functional platform can be arranged at an already erected wind turbine. Thus, the wind turbine can produce electric energy before the functional platform is installed, already. This is also advantageous, when the availability of material for the functional platform and components for being placed on top of the functional platform, such as chemical production units or the like, are subject to delivery problems or delivery delay. The assembly of the wind turbine can continue, even without the functional platform. Moreover, the complete functional platform, especially together with the further components installed on top of the functional platform, can be easily tested prior installation, by these means, defects can be identified at an early stage. Beyond that, replacement of the complete functional platform, especially together with the further components installed on top of the functional platform, is easier. Thus, an obsolete or defect functional platform can be exchanged within short time. Even for maintenance of the functional platform, especially together with the further components installed on top of the functional platform, the functional platform can be exchanged easily. The demounted functional platform can be serviced at landsite then, in a safe environment.

According to a preferred further development of the invention, the providing of the wind turbine can comprise:
- providing the base section of the wind turbine tower,
- installing the transition piece onto the base section,
- installing the working platform at the transition piece for providing the transition unit,
- installing the upper tower section of the wind turbine onto the transition piece for providing the wind turbine tower, and
- installing the nacelle with the rotor, the wind turbine blades and the generator on top of the wind turbine tower.

Preferably, these steps are performed at an offshore location. It is preferred that the base section is provided with a caisson for constituting a foundation of the wind turbine. It is further preferred that these installation steps are performed according to known methods for installing an offshore wind turbine. This has the advantage that in a simple and inexpensive way, the flexibility of the installation of the wind turbine system is increased.

It is preferred, according to the invention, that the providing of the wind turbine comprises providing of a wind turbine, which already produces electric energy, wherein the wind turbine already comprises the first transition connector and the second transition connector or wherein the first transition connector and the second transition connector are attached to the wind turbine. In other words, according to a first scenario, providing means that a wind turbine is provided, which is already capable of converting wind energy into electrical energy. The transition unit of the wind turbine already comprises the first transition connector and the second transition connector. Preferably, the transition unit already comprises a third transition connector. According to a second scenario, providing means that a wind turbine is provided, which is already capable of converting wind energy into electrical energy. The transition unit of the wind turbine does not comprise the first transition connector and/or the second transition connector. Therefore, in a working process, the first transition connector and/or the second transition connector is attached to the transition unit. Preferably, the third transition connector is attached to the transition unit as well. This has the advantage that in a simple and inexpensive way, the flexibility of the installation of the wind turbine system is increased.

More preferred, the arranging of the functional platform at the transition unit is performed by aligning the first functional connector with the first transition connector in a first step and by aligning the second functional connector with the second transition connector in a succeeding second step by rotating the functional platform relative to the transition unit about a vertical connection axis through a contact zone between the first functional connector and the first transition connector to a first end position, wherein in the first end position, the first functional connector is arranged vertically above the first transition connector or at least a part of the first transition connector and the second functional connector is arranged vertically above the second transition connector or at least a part of the second transition connector.

In the first step, the first functional connector is aligned with the first transition connector in a first mutual position. Preferably, from the first mutual position to the first end position, the first functional connector and the first transition connector contact each other in the mutual contact zone. Preferably, from the first mutual position to the first end position, the first functional connector and the first transition connector constitute a hinge or at least provide a hinge-like function. Thus, the functional platform is hinged to the transition unit or at least hinge-like arranged at the transition unit. Moreover, at the first mutual position, the second functional connector is horizontally and vertically spaced apart from the second transition connector. A hinge axis is constituted by the vertical connection axis through the contact zone between the first functional connector and the first transition connector.

In the second step, the functional platform is rotated relative to the transition unit about the hinge axis from the first mutual position to the first end position. In the first end position, the first functional connector is arranged vertically above the first transition connector or at least a part of the first transition connector and the second functional connector is arranged vertically above the second transition connector or at least a part of the second transition connector. This means that in the first end position, the functional platform is arranged vertically above its final end position. Preferably, in the first end position, the second functional connector is arranged close to the transition unit.

This has the advantage that in a simple and inexpensive way, the assembly process of the functional platform at the transition unit is improved. During the whole attachment process, the functional platform can be held in a horizontal position. Thus, components can be installed on top of the functional platform, already.

In a particularly preferred embodiment, the rotating of the functional platform relative to the transition unit is stopped in the first end position by a bumper device of the functional platform and/or the transition unit. In other words, the rotating action is limited by the bumper device. The bumper device can be integrated into the second functional connector and/or the second transition connector. Preferably, the bumper device has a second function, namely a vertical guiding rail. The bumper device can comprise a dampening device to avoid rough mechanical impact between the second functional connector and the transition unit at adverse weather conditions. This has the advantage that in a simple and inexpensive way, the secure installation of the functional platform at the transition unit is further improved.

According to an alternative embodiment of the invention, the method can comprise that the arranging of the functional platform at the transition unit is performed by simultaneously aligning the first functional connector with the first transition connector and the second functional connector with the second transition connector by horizontally moving the functional platform relative to the transition unit to a first end position, wherein in the first end position, the first functional connector is arranged vertically above the first transition connector or at least a part of the first transition connector and the second functional connector is arranged vertically above the second transition connector or at least a part of the second transition connector. This means that in an initial position of the functional platform, the first functional connector is horizontally and vertically spaced apart from the first transition connector and the second functional connector is horizontally and vertically spaced apart from the second transition connector. The horizontal movement of the functional platform is preferably such that the horizontal component is eliminated in the first end position. This has the advantage that in a simple and inexpensive way, the secure installation of the functional platform at the transition unit is further improved.

Preferably the horizontally moving of the functional platform relative to the transition unit is stopped in the first end position by a bumper device of the functional platform and/or the transition unit. In other words, the horizontally moving action is limited by the bumper device. The bumper device can be integrated into the first functional connector and/or the first transition connector and/or the second functional connector and/or the second transition connector. Preferably, the bumper device has a second function, namely a vertical guiding rail. The bumper device can comprise a dampening device to avoid rough mechanical impact between the second functional connector and the transition unit at adverse weather conditions. This has the advantage that in a simple and inexpensive way, the installation of the functional platform at the transition unit is further improved. This has the advantage that in a simple and inexpensive way, the secure installation of the functional platform at the transition unit is further improved.

According to a preferred embodiment of the invention, in the first end position, the functional platform is lowered until the first functional connector engages with the first transition connector in the final end position and/or the second functional connector engages with the second transition connector in the final end position. Within the scope of the invention, getting into an engagement is considered as a further limiting of a degree of freedom. Preferably, this is realized by mutual form fit, such as a snap in mechanism, a hook and pin mechanism or the like. The limiting of the degree of freedom is preferably such that only a vertical upward movement of the functional platform relatively to the transition unit is allowed. Thus, the functional platform is held in place by gravity. This has the advantage that in a simple and inexpensive way, the secure installation of the functional platform at the transition unit is further improved.

Particularly preferred, the arranging of the functional platform at the transition unit is performed such that a rod-shaped third functional connector of the functional platform engages with a third transition connector of the transition piece, wherein the third transition connector is arranged at a lower height than the first transition connector and/or the second transition connector. By the third functional connector and the third transition connector, a rotational moment of the functional platform about the first functional connector and the second functional connector can be reduced. Preferably, a plurality of third functional connectors and third transition connectors is provided to distribute the load of the functional platform, preferably equally. It is preferred that the third transition connector has a u-shaped, v-shaped or similar cross section for receiving and holding the third functional connector in place. This has the advantage that in a simple and inexpensive way, the stability of the functional platform at the transition unit is improved.

It is preferred according to the invention that two functional platforms are provided, wherein the functional platforms are arranged at the transition unit separately for constituting a common functional platform. Preferably, each of the functional platforms is installed at the transition unit as described above for a functional platform. Preferably, all functional platforms are installed the same way, e.g., by rotating action and succeeding vertical lowering or horizontal action and succeeding vertical lowering. It is preferred that the two functional platforms are mutually connected by fixation means after installation for constituting the common functional platform. This has the advantage that in a simple and inexpensive way, the secure installation of the functional platform at the transition unit is further improved.

Preferably, the functional platform is provided with at least one electrochemical production unit installed. Preferably, a plurality of electrochemical production units is installed on top of the functional platform. This has the advantage that in a simple and inexpensive way, the chemical conversion process is brought to a platform of the wind turbine. Thus, the electricity produced by the wind turbine can be directly used for the chemical product conversion process, e.g., for producing hydrogen, ammonia or the like. The size of power lines for connecting the wind turbine to the power grid can be reduced. Furthermore, electrical losses due to transport are reduced.

Further preferred, the at least one electrochemical production unit is provided as a hydrogen and/or ammonia producing electrochemical production unit. This has the advantage that in a simple and inexpensive way, surplus energy of the wind turbine can be converted into chemical energy carriers for the production of electricity during periods of unfavorable, e.g. insufficient or too high, wind speeds.

It is preferred that the first transition connector and/or the second transition connector are provided at the transition piece or at the working platform. Preferably, the first transition connector and the second transition connector are provided at the same height at the transition unit. It is preferred that the first transition connector is arranged at the transition unit such that an engagement with the first functional connector can be achieved by a straight horizontal movement of the functional platform relatively to the transition unit. Further preferred, the second transition connector is arranged at the transition unit such that an engagement with the second functional connector can be achieved by a straight or curved horizontal movement of the functional platform relatively to the transition unit. This has the advantage that the secure installation of the functional platform at the transition unit is further improved.

According to a second aspect of the invention, the object is achieved by a wind turbine system with a wind turbine for converting wind energy into electrical energy and a functional platform for providing a technical function based on the electrical energy provided by the wind turbine. According to the invention, the wind turbine system is installed by a method according to the invention.

The wind turbine system according to the invention has all the advantages that have already been described for a method for installing a wind turbine system according to the first aspect of the invention. Accordingly, the wind turbine system according to the invention has the advantage over conventional wind turbine systems that in a simple and inexpensive way, a functional platform is arranged at an already erected wind turbine. Thus, the wind turbine can produce electric energy before the functional platform is installed, already. This is also advantageous, when the availability of material for the functional platform and components for being placed on top of the functional platform, such as chemical production units or the like, are subject to delivery problems or delivery delay. The assembly of the wind turbine can continue, even without the functional platform. Moreover, the complete functional platform, especially together with the further components installed on top of the functional platform, can be easily tested prior installation, by these means, defects can be identified at an early stage. Beyond that, replacement of the complete functional platform, especially together with the further components installed on top of the functional platform, is easier. Thus, an obsolete or defect functional platform can be exchanged within short time. Even for maintenance of the functional platform, especially together with the further components installed on top of the functional platform, the functional platform can be exchanged easily. The demounted functional platform can be serviced at landsite then, in a safe environment.

Preferably, the transition piece is configured as an integral part of the base section. In other words, according to this preferred embodiment of the invention, a part of the base section is denoted as transition piece.

Further advantages, features and details of the invention unfold from the following description, in which by reference to drawings working examples of the present invention are described in detail. Thereby, the features from the claims as well as the features mentioned in the description can be essential for the invention as taken alone or in an arbitrary combination. In the drawings:
Figure 1 shows a schematic side view of a wind turbine system according to a preferred embodiment of the invention,
Figure 2 shows a schematic perspective view of a first step of a method according to a preferred embodiment,
Figure 3 shows a schematic perspective view of a second step of a method according to the preferred embodiment,
Figure 4 shows a schematic perspective view of a third step of a method according to the preferred embodiment,
Figure 5 shows a schematic perspective view of a fourth step of a method according to the preferred embodiment,
Figure 6 shows a schematic perspective view of a functional platform according to a preferred first embodiment,
Figure 7 shows another schematic perspective view of the functional platform of figure 6,
Figure 8 shows a schematic perspective view of a wind turbine system according to the preferred first embodiment of the invention,
Figure 9 shows a schematic perspective view of a partly assembled wind turbine system according to a preferred second embodiment of the invention,
Figure 10 shows a schematic perspective view of a fully assembled wind turbine system according to the preferred second embodiment of figure 9,
Figure 11 shows a schematic top view of the partly assembled wind turbine system according to figure 9,
Figure 12 shows a schematic top view of the wind turbine system of figure 10 right before being fully assembled,
Figure 13 shows a schematic perspective view of a partly assembled wind turbine system according to the invention,
Figure 14 shows a schematic perspective view of an alternative embodiment of a partly assembled wind turbine system according to the invention,
Figure 15 shows a schematic detail view of an alignment of a second functional connector with a second transition connector in a first end position, and
Figure 16 shows a schematic detail view of an alignment of the second functional connector with the second transition connector of figure 15 in a final end position.

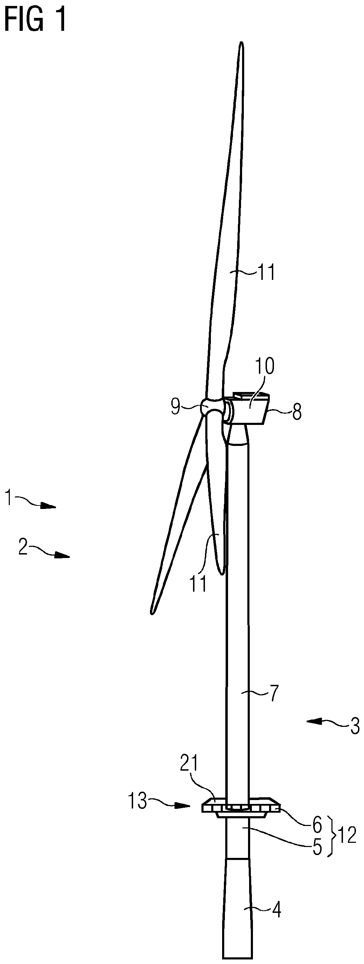

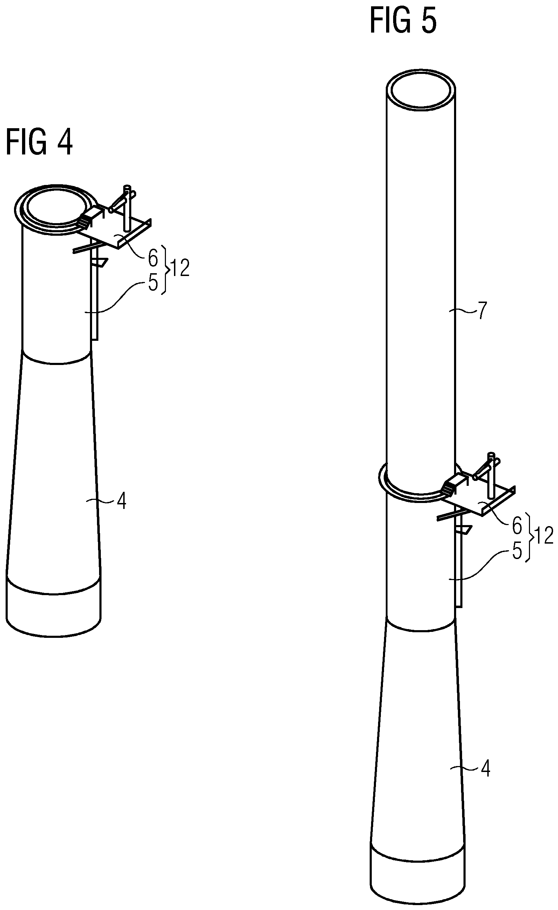

Elements with the same function and effectiveness are denoted each in figures 1 to 16 with the same reference numbers.

In fig. 1, a wind turbine system 1 according to a preferred embodiment of the invention is shown in a schematic side view. The wind turbine system 1 comprises a wind turbine 2 and a functional platform 13. The wind turbine 2 comprises a wind turbine tower 3 with a base section 4 at a lower end, a transition piece 5 installed on top of the base section 4 and an upper tower section 7, installed on top of the transition piece 5. The upper tower section 7 can comprise a plurality of not shown section elements, stacked up to constitute the upper tower section 7.

At the transition piece 5, a working platform 6 is arranged. The transition piece 5 and the working platform 6 form a transition unit 12. The functional platform 13 is arranged at the transition unit 12 in a way that a platform of the functional platform 13 is on the same height level than the working platform 6. On top of the functional platform 13, one or more electrochemical production units 21 are installed.

On top of the wind turbine tower 3, a nacelle 8 with a rotor 9 and a generator 10 is mounted. The generator 10 is arranged within an interior of the nacelle 8. The rotor 9 is partly arranged inside the nacelle 8, wherein a hub of the rotor is arranged outside of the nacelle 8. At the hub of the rotor 9, three wind turbine blades 11 are installed. Thus, wind energy can be transformed into rotational energy and the rotational energy can be transformed into electrical energy by the wind turbine 2. The electrical energy can be used by the electrochemical production units 21 for converting chemicals.

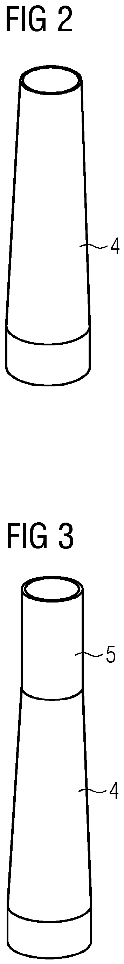

Fig. 2 to fig. 5 show four steps of providing a wind turbine 2 according to a preferred embodiment of the inventive method. In a first step, the base section 4 is provided. In a second step, the transition piece 5 is installed on top of the base section 4. In a third step, the working platform 6 is installed at the transition piece 5. The transition piece 5 and the working platform 6 constitute the transition unit 12. In a fourth step, the upper tower section 7 is installed on top of the transition piece 5. Preferably, a not shown caisson is installed at the bottom end of the base section 4. The nacelle 8 with rotor 9 and wind turbine blades 11 is not shown.

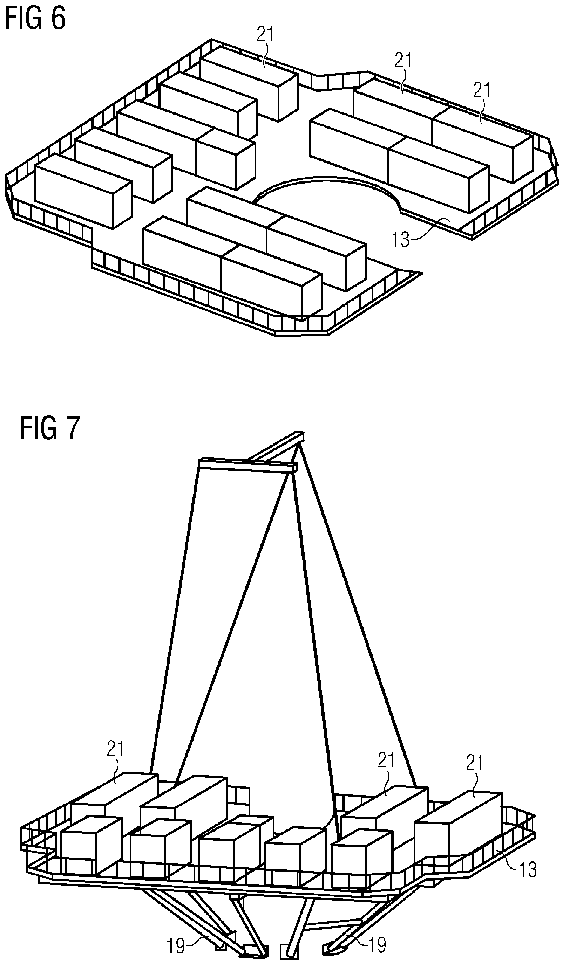

In fig. 6, a functional platform 13 according to a preferred first embodiment of the invention is shown in a schematic perspective view. The functional platform 13 has a c-shaped design for arranging around the wind turbine tower 3 at the transition piece 5 in a horizontal, linear movement. On top of the functional platform 13, a plurality of electrochemical production units 21 are arranged.

Fig. 7 shows the functional platform 13 of fig. 6 in another schematic perspective view and attached to a crane. In this perspective, a plurality of rod-shaped third functional connector 19, which are attached to a bottom of the functional platform 13 are visible. The third functional connectors 19 are provided for stabilizing the functional platform 13 against the transition piece 5. In this configuration, the functional platform 13 can be installed at the wind turbine 2 according to the method of the invention.

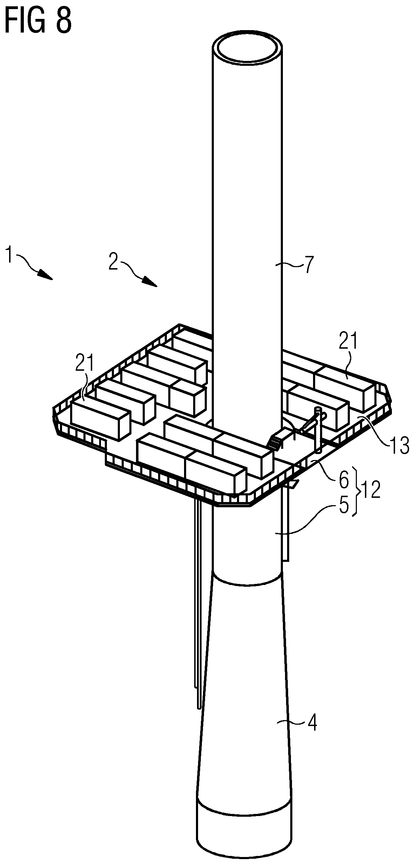

In fig. 8, a wind turbine system 1 according to the preferred first embodiment of the invention is shown in a schematic perspective view. The functional platform 13 of fig. 6 is arranged at the transition unit 12 of the wind turbine 2. The functional platform 13 is horizontally aligned with the working platform 6 and, preferably, connected to the working platform 6 to constitute a common platform. The nacelle 8 with rotor 9 and wind turbine blades 11 is not shown.

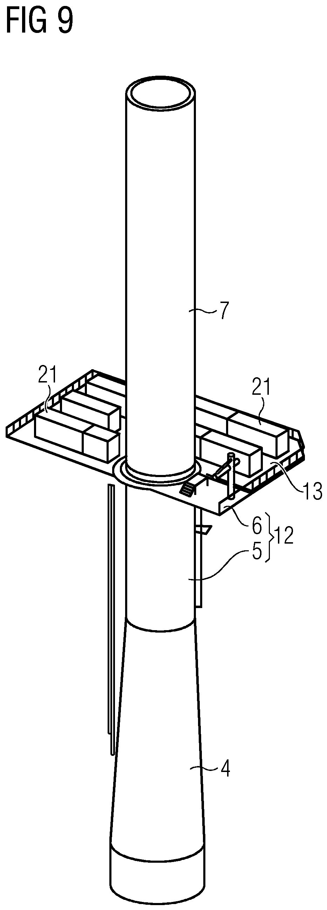

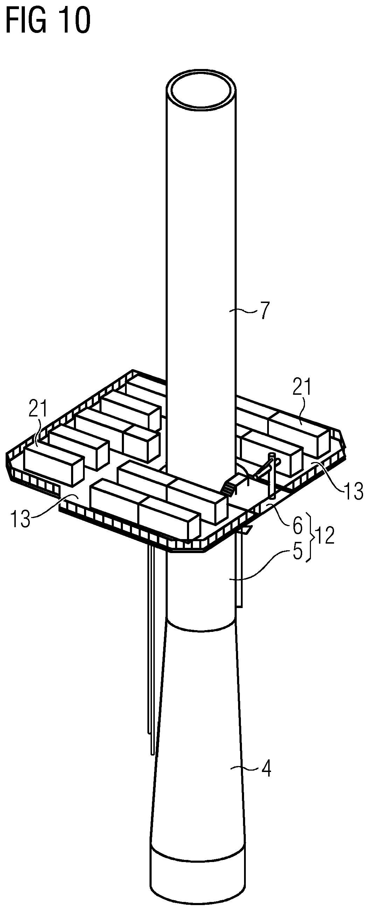

Fig. 9 to fig. 12 show a wind turbine system 1 according to a preferred second embodiment of the invention. In fig. 9, a half-sized functional platform 13 is arranged at one side of the transition unit 12. In fig. 10, another half-sized functional platform 13 is arranged at the other side of the transition unit 12. A nacelle 8 with rotor 9 and wind turbine blades 11 is not shown.

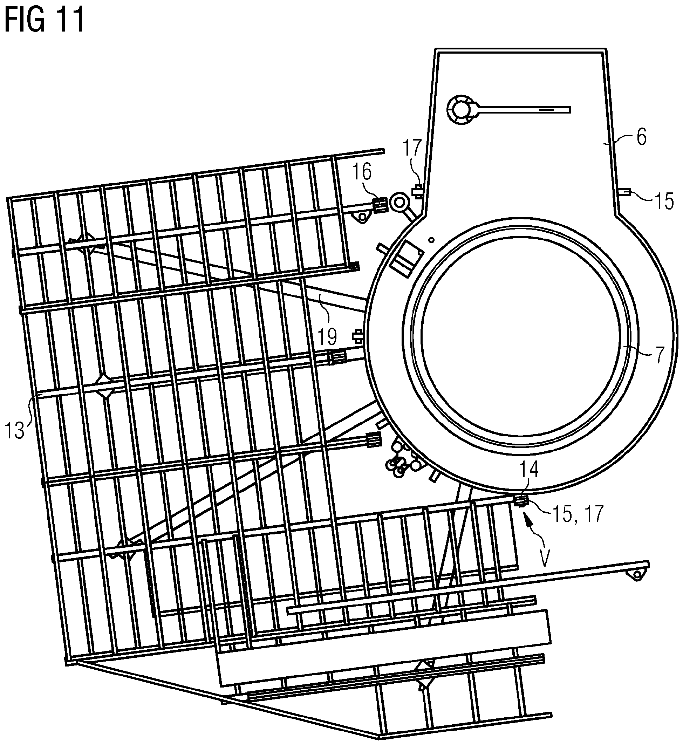

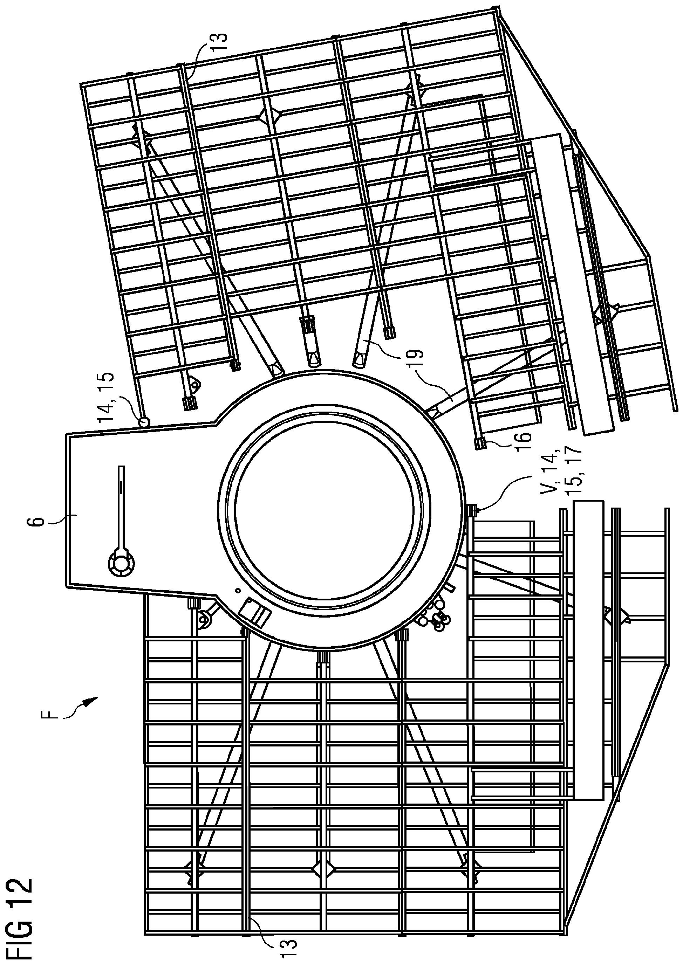

In fig. 11 and fig. 12, a part of the installation process of the wind turbine system 1 according to a preferred second embodiment of the invention is illustrated. Electrochemical production units 21 are not illustrated in these figures. In fig. 11, a first functional connector 14 of the functional platform 13 is engaged with a first transition connector 15 of the transition unit 5, thus forming a hinge-like connection. In this embodiment, the first transition connector 15 is attached to the working platform 6. In this perspective, the functional platform 13 is rotated clock-wise about a vertical connection axis V, which is defined by the connection of the first functional connector 14 with the first transition connector 15. The rotation ends when a second functional connector 16 of the functional platform 13 engages with a second transition connector 17 of the transition unit 12. In this embodiment, the second transition connector 17 is attached to the working platform 6. More functional connectors and transition connectors can be provided.

In fig. 12, the functional platform 13 on the left side is in a final end position F and fixedly attached to the transition unit 12. The functional platform 13 on the right side is hinged to the transition unit 12 by its first functional connector 14 and another first transition connector 15 of the transition unit 12. In this embodiment, the other first transition connector 15 is also configured as a second transition connector 17 for engaging with a second functional connector 16 of the functional platform 13 on the right side, when the functional platform 13 is rotated anti-clock-wise.

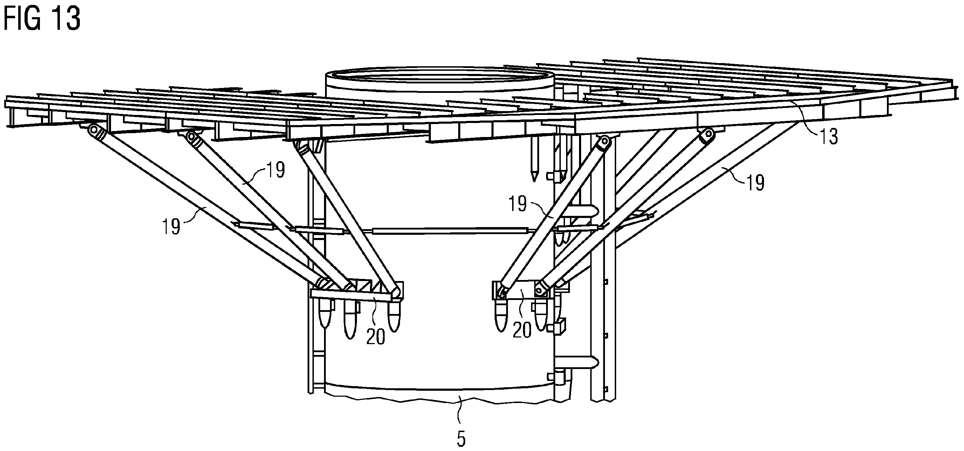

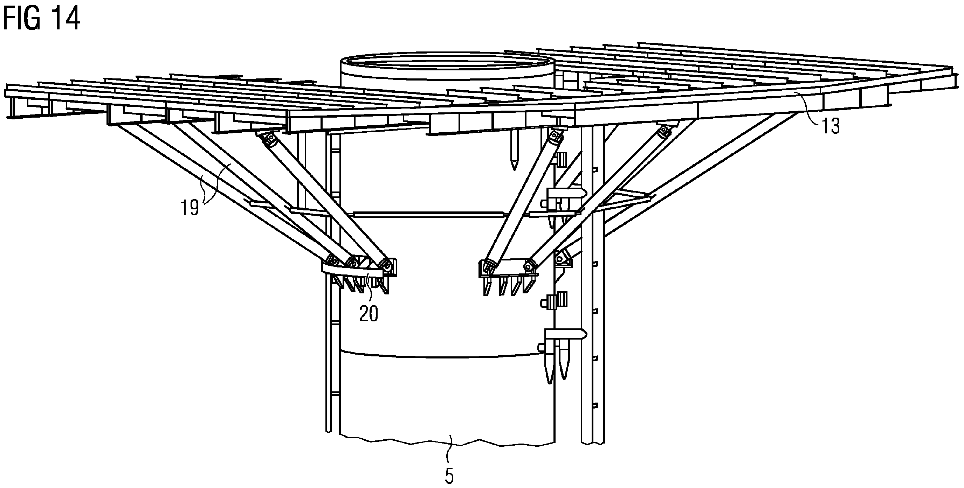

Fig. 13 and fig. 14 show two different embodiments of third functional connectors 19 of the functional platform 13 in engagement with third transition connectors 20 of the transition piece 5. In fig. 13, the third functional connectors 19 comprise bolts, which are inserted into brackets of the third transition connectors 20. In fig. 14, the third functional connectors 19 are hinged to brackets of the third transition connectors 20.

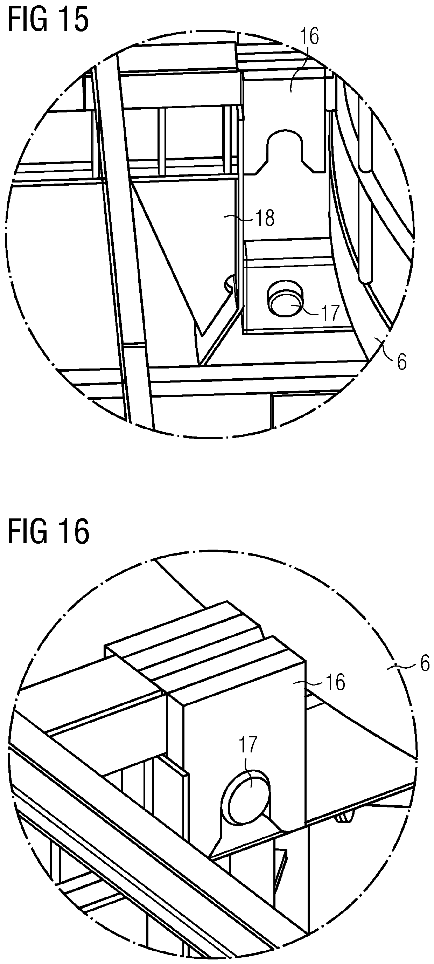

Fig. 15 shows an alignment of a second functional connector 16 with a second transition connector 17 in the first end position E. In the first end position E, a bumper device 18 of the functional platform 13 is moved against the second transition connector 17, thus preventing a further relative movement of the functional platform 13 to the transition unit 12 in one direction. The second functional connector 16 is arranged straight above the second transition connector 17.

In fig. 16, the alignment of the second functional connector 16 with the second transition connector 17 is shown in the final end position F. From the first end position E to the final end position F, the functional platform 13 has been lowered in a vertical direction. By these means, a form fit part of the second functional connector 16 is engaged with a form fit part of the second transition connector 17. Thus, a horizontal movement of the functional platform 13 is prevented.

## Claims

1. Method for installing a wind turbine system (1), the method comprising:
- Providing a wind turbine (2) of the wind turbine system (1), wherein the wind turbine (2) comprises a wind turbine tower (3) with a base section (4), a transition piece (5), a working platform (6) and an upper tower section (7) and a nacelle (8) with a rotor (9), a generator (10) and wind turbine blades (11), wherein the transition piece (5) and the working platform (6) constitute a transition unit (12),
- Arranging a functional platform (13) at the erected transition unit (12) by aligning a first functional connector (14) of the functional platform (13) with a first transition connector (15) of the transition unit (12) and by aligning a second functional connector (16) of the functional platform (13) with a second transition connector (17) of the transition unit (12), and
- Fixing the first functional connector (14) to the first transition connector (15) and/or the second functional connector (16) to the second transition connector (17), when the functional platform (13) is arranged in a final end position (F) with respect to the transition unit (12).

2. Method according to claim 1,
**characterized in**
**that** the providing of the wind turbine (2) comprises:
- providing the base section (4) of the wind turbine tower (3),
- installing the transition piece (5) onto the base section (4),
- installing the working platform (6) at the transition piece (5) for providing the transition unit (12),
- installing the upper tower section (7) of the wind turbine (2) onto the transition piece (5) for providing the wind turbine tower (3), and
- installing the nacelle (8) with the rotor (9), the wind turbine blades (11) and the generator (10) on top of the wind turbine tower (3).

3. Method according to claim 1,
**characterized in**
**that** the providing of the wind turbine (2) comprises providing of a wind turbine (2), which already produces electric energy, wherein the wind turbine (2) already comprises the first transition connector (15) and the second transition connector (17) or wherein the first transition connector (15) and the second transition connector (17) are attached to the wind turbine (2).

4. Method according to any of the previous claims,
**characterized in**
**that** the arranging of the functional platform (13) at the transition unit (12) is performed by aligning the first functional connector (14) with the first transition connector (15) in a first step and by aligning the second functional connector (16) with the second transition connector (17) in a succeeding second step by rotating the functional platform (13) relative to the transition unit (12) about a vertical connection axis (V) through a contact zone between the first functional connector (14) and the first transition connector (15) to a first end position (E), wherein in the first end position (E), the first functional connector (14) is arranged vertically above the first transition connector (15) or at least a part of the first transition connector (15) and the second functional connector (16) is arranged vertically above the second transition connector (17) or at least a part of the second transition connector (17).

5. Method according to claim 4,
**characterized in**
**that** the rotating of the functional platform (13) relative to the transition unit (12) is stopped in the first end position (E) by a bumper device (18) of the functional platform (13) and/or the transition unit (12).

6. Method according to any of claims 1 to 3,
**characterized in**
**that** the arranging of the functional platform (13) at the transition unit (12) is performed by simultaneously aligning the first functional connector (14) with the first transition connector (15) and the second functional connector (16) with the second transition connector (17) by horizontally moving the functional platform (13) relative to the transition unit (12) to a first end position (E), wherein in the first end position (E), the first functional connector (14) is arranged vertically above the first transition connector (15) or at least a part of the first transition connector (15) and the second functional connector (16) is arranged vertically above the second transition connector (17) or at least a part of the second transition connector (17).

7. Method according to claim 6,
**characterized in**
**that** the horizontally moving of the functional platform (13) relative to the transition unit (12) is stopped in the first end position (E) by a bumper device (18) of the functional platform (13) and/or the transition unit (12).

8. Method according to any of claims 4 to 7,
**characterized in**
**that**, in the first end position (E), the functional platform (13) is lowered until the first functional connector (14) engages with the first transition connector (15) in the final end position (F) and/or the second functional connector (16) engages with the second transition connector (17) in the final end position (F).

9. Method according to any of the previous claims,
**characterized in**
**that** the arranging of the functional platform (13) at the transition unit (12) is performed such that a rod-shaped third functional connector (19) of the functional platform (13) engages with a third transition connector (20) of the transition piece (5), wherein the third transition connector (20) is arranged at a lower height than the first transition connector (15) and/or the second transition connector (17).

10. Method according to any of the previous claims,
**characterized in**
**that** two functional platforms (13) are provided, wherein the functional platforms (13) are arranged at the transition unit (12) separately for constituting a common functional platform (13).

11. Method according to any of the previous claims,
**characterized in**
**that** the functional platform (13) is provided with at least one electrochemical production unit (21) installed.

12. Method according to claim 11,
**characterized in**
**that** the at least one electrochemical production unit (21) is provided as a hydrogen and/or ammonia producing electrochemical production unit (21).

13. Method according to any of the previous claims,
**characterized in**
**that** the first transition connector (15) and/or the second transition connector (17) are provided at the transition piece (5) or at the working platform (6).

14. A wind turbine system (1) with a wind turbine (2) for converting wind energy into electrical energy and a functional platform (13) for providing a technical function based on the electrical energy provided by the wind turbine (2),
**characterized in**
**that** the wind turbine system (1) is installed by a method according to any of the previous claims.

15. Wind turbine system (1) according to claim 14,
**characterized in**
**that** the transition piece (5) is configured as an integral part of the base section (4).
